# EUROPÄISCHE PATENTANMELDUNG

(11) **EP 4 645 183 A1**
(43) Veröffentlichungstag der Anmeldung: **05.11.2025**
(21) Anmeldenummer: 25173000.8
(22) Anmeldetag: 28.04.2025
(51) Int. Cl.: G06Q 10/0631, G06Q 50/08, B28B 1/093

(54) **PLANUNGSSYSTEM UND PLANUNGSVERFAHREN ZUM UNTERSTÜTZEN EINES BETONAGEPROZESSES MIT ORTBETON**

(30) Priorität: 02.05.2024 DE 102024112306
(71) Anmelder: Wacker Neuson Produktion GmbH & Co. KG, 85084 Reichertshofen (DE)
(72) Erfinder: BERGER, Rudolf, 82031 Grünwald (DE); EIB, Dominic, 85283 Wolnzach (DE)
(74) Vertreter: Müller Hoffmann & Partner

(57) **Zusammenfassung**

Es wird ein Planungssystem zum Unterstützen eines Betonageprozesses mit Ortbeton auf einer Baustelle angegeben, mit einer BIM-Einrichtung (1) zum Speichern eines Bauwerksdatenmodells (BIM); mit einer Umgebungs-Einrichtung (2) zum Dokumentieren und Speichern von Umgebungsparametern aus einer Systemumgebung; mit einer Datenbank-Einrichtung (5) zum Speichern von Betonageinformationen; und mit einer Prozessplanungs-Vorrichtung (3) zum Erstellen eines Prozessplans für den Betonageprozess aufgrund von Informationen aus der BIM-Einrichtung, der Umgebungs-Einrichtung und der Datenbank-Einrichtung.

## Beschreibung

Die Erfindung betrifft ein Planungssystem zum Unterstützen eines Betonageprozesses mit Ortbeton sowie ein Verfahren dafür.

Die Verarbeitung von Ortbeton auf Baustellen ist weit verbreitet. Als Ortbeton wird Beton verstanden, der an dem Ort erhärtet, an dem er verbaut wird. In der Regel wird Ortbeton als Transportbeton mit Mischfahrzeugen auf eine Baustelle gebracht oder an Ort und Stelle als Baustellenbeton gemischt. Ortbeton wird also nicht als Betonfertigteil geliefert und nur noch eingebaut. Vielmehr wird noch fließfähiger Beton zum Einsatzgebiet auf die Baustelle gebracht und dort in der Regel in eine Verschalung gefüllt, wo er aushärtet.

Nach Verfüllen des Betons und vor der Aushärtung ist es erforderlich, den Beton zu verdichten, um Gaseinschlüsse und Kiesnester zu verhindern. Nur ein ausreichend verdichteter Beton erfüllt die üblichen technischen und gesetzlichen Vorschriften hinsichtlich Festigkeit und Dichte.

Zum Verdichten von Beton sind verschiedene Typen von Betonverdichtungsvorrichtungen bekannt, insbesondere Innenrüttler und Außenrüttler.

Bei Innenrüttlern wird eine Rüttelflasche in Form einer Stahlröhre mit Hilfe eines elastischen Schlauchs in den zu verdichtenden Beton eingehängt. Im Inneren der Rüttelflasche ist ein Unwuchterreger vorgesehen, der die Rüttelflasche in starke Vibration versetzt, wodurch die Verdichtungswirkung erzielt wird.

Außenrüttler weisen ebenfalls einen Unwuchterreger auf. Sie werden jedoch an der Außenseite einer Schalung angebracht, in deren Innerem sich der noch fließfähige Beton befindet. Meist werden mehrere Außenrüttler an einer Schalung angebracht, um durch gleichzeitiges Betreiben der in den Außenrüttlern vorgesehenen Unwuchterreger eine gleichmäßige Verdichtung des Betons zu erreichen.

In der Praxis wird der Beton in die Schalung eingefüllt und vor Ort durch einen Werker (Anwender) nach Belieben und auf Sicht verdichtet. Die Qualität des Verdichtungsvorgangs hängt dabei nicht unerheblich von der Erfahrung und dem Qualifikationsgrad des Werkers ab. Gerade bei unerfahrenen Werkern besteht die Möglichkeit einer zu geringen oder zu langen Verdichtung, mit jeweils unerwünschten Nebenwirkungen, wie z.B. nicht ausreichende bzw. fehlende Verdichtung, zu geringe Festigkeit des ausgehärteten Betons, zu lange Arbeitszeit, unwirtschaftlicher Einsatz von Personal und Gerät, Entmischung bzw. Sedimentation.

Zur Unterstützung eines Werkers während des Verdichtens an einer Ortbeton-Baustelle wurde bereits eine Werkerführung in Form eines Systems zum Führen einer Bedienperson bei einer Betonverdichtung mit einer Betonverdichtungsvorrichtung vorgeschlagen, die in der nachveröffentlichten DE 10 2022 134 330 A1 beschrieben ist.

Das Strukturieren, Planen und Optimieren eines Ortbetonverdichtungsprozesses einschließlich der Zeitplanung und der Geräteplanung erfordert - gerade auf Großbaustellen - hohe Fachkenntnisse und einen erheblichen Planungsaufwand.

Der Erfindung liegt daher die Aufgabe zugrunde, ein Planungssystem und ein Planungsverfahren zum Unterstützen einer Person beim Planen eines Betonageprozesses mit Ortbeton anzugeben.

Die Aufgabe wird erfindungsgemäß durch ein Planungssystem mit den Merkmalen von Anspruch 1 sowie durch ein Planungsverfahren gemäß dem nebengeordneten Anspruch gelöst. Vorteilhafte Ausgestaltungen sind in den abhängigen Ansprüchen angegeben.

Es wird ein Planungssystem zum Unterstützen eines Betonageprozesses mit Ortbeton auf einer Baustelle angegeben, mit einer BIM-Einrichtung zum Speichern eines Bauwerksdatenmodells (BIM); mit einer Umgebungs-Einrichtung zum Dokumentieren und Speichern von Umgebungsparametern aus einer Systemumgebung; mit einer Datenbank-Einrichtung zum Speichern von Betonageinformationen; und mit einer Prozessplanungs-Vorrichtung zum Erstellen eines Prozessplans für den Betonageprozess aufgrund von Informationen aus der BIM-Einrichtung, der Umgebungs-Einrichtung und der Datenbank-Einrichtung.

Im Zentrum des Planungssystems steht somit die Prozessplanungs-Vorrichtung, mit der ein Prozessplan für den Betonageprozess erstellt werden kann. Dabei nutzt die Prozessplanungs-Vorrichtung Informationen der anderen Komponenten.

In der BIM-Einrichtung sind Daten bezüglich des Bauwerks als Modelldaten hinterlegt. Dabei kann auf den bekannten BIM-Standard zurückgegriffen werden. Dabei werden alle relevanten Bauwerksdaten digital modelliert, kombiniert und erfasst. Das Bauwerk ist als virtuelles Modell auch geometrisch visualisiert. Somit sind alle notwendigen Daten des Bauwerks, im vorliegenden Fall insbesondere die Geometrie, aber auch Angaben zur Bewehrung, zum Schalungstyp, zur Betonsorte, zur Betonzuführung etc. in dem BIM-Modell hinterlegt.

Das Bauwerksdatenmodell kann dementsprechend Bauwerksdaten enthalten, wie z.B. geometrische Gegebenheiten (Abmessungen der Baustelle bzw. des Ortes des Betonageprozesses), Maschenweite Eisen (Angaben zur Armierung), Betonsorte, Schalungstyp (Art der Betonschalung), Schalungsgeometrie (z.B. Abmessungen), Standort des Betonageprozesses (z.B. Orientierung auf einer Baustelle), Standort von Energiequellen (z.B. Stromkabel, Stromverteiler etc.), Betonzuführung (Art und Menge der Zuführung von fließfähigem Beton).

In der Umgebungs-Einrichtung sind Informationen hinterlegt, die nicht unmittelbar die Baustelle oder gar den Ort des Betonageprozesses betreffen. Insbesondere kann es sich bei diesen Informationen handeln um Informationen zum Unternehmens-Flottenmanagement (im vorhandene und verfügbare Geräte), Geräte-Mietpool (Fremdgeräte, die angemietet werden können), Neugeräte-Pool (Geräte, die für die Arbeiten auf der Baustelle extra gekauft werden können), verfügbare Fahrzeuge (Betonpumpe), Wetterdaten, Know-how. Die Angaben betreffen somit z.B. Maschinen und Geräte, die temporär bereitgestellt werden müssen, um die Betonage durchführen zu können. Dabei können Informationen über Geräte aus dem Unternehmen selbst, aber auch über Mietgeräte oder Neugeräte (Kauf von Geräten) dokumentiert sein.

Auch ist es möglich, hier eine Verbindung zu einem Lieferanten, z.B. zu einem Betonproduzenten, herzustellen, um dort entsprechende Kapazitäten für den Betonageprozess, ggfs. auch zum gewünschten Zeitpunkt, bereitstellen zu können.

Die Betonageinformationen in der Datenbank-Einrichtung können ausgewählt sein aus der Gruppe Prozesswissen (Vorgaben über den Ablauf eines Betonageprozesses, Kapazitätsplanung, erforderliche Dauer einer Betonverdichtung, Intensität der Betonverdichtung), Gerätebestand vor Ort (Anzahl der Betonverdichtungsgeräte, Typen der Betonverdichtungsgeräte), Gerätebestand Unternehmensflotte, verfügbare Mietgeräte, verfügbare Neugeräte, verfügbare Betonbomben, verfügbare Betonpumpen, Metadaten. Diese Informationen werden teilweise von außen, z.B. aus der Systemumgebung bereitgestellt und in der Datenbank hinterlegt. Die Daten können permanent gepflegt werden, wie z.B. die Wetterdaten oder die Geräteinformationen.

Im Zentrum des Systems steht die Prozessplanungs-Vorrichtung, die in der Lage ist, aus den zur Verfügung gestellten Daten, insbesondere aufgrund der Daten des Bauwerksdatenmodells (BIM) und der in der Datenbank hinterlegten Daten Vorschläge für den Betonageprozess zu erarbeiten. Die Vorschläge können mehrere Bereiche bzw. Abschnitte, insbesondere sogar alle relevanten Abschnitte des Betonageprozesses betreffen, so dass durch die Prozessplanungs-Vorrichtung der vollständige Betonageprozess abgebildet und unterstützt werden kann. Die einzelnen Verfahrensabschnitte können insbesondere betreffen: Anlieferung des fließfähigen Betons, Menge/Volumen des Betons, Verfüllung des Betons in die Schalung, Betonverdichtung, Nachbearbeitung etc.

Insbesondere kann die Prozessplanungs-Vorrichtung ausgebildet sein, um wenigstens einen der folgenden Schritte auszuführen:
- Definieren eines Baufelds, in dem der Betonageprozess erfolgen soll;
- Empfehlen eines Betonverdichtungsvorrichtungstyps aufgrund von Informationen zu Betonsorte, Schalungstyp und/oder Schalungsgeometrie;
- Empfehlen/Auswählen von wenigstens einer Betonverdichtungsvorrichtung aufgrund des empfohlenen Betonverdichtungsvorrichtungstyps und aufgrund von Informationen über verfügbare Bestandsgeräte, Mietgeräte oder Neugeräte;
- Definieren von Orten, an denen die Betonverdichtungsvorrichtung den Beton zu verdichten hat;
- Definieren von Orten, an denen Komponenten einer Elektroversorgung für die Betonverdichtungsvorrichtung zu positionieren sind;
- Definieren von Orten, an denen noch fließfähiger Beton zuzuführen ist;
- Definieren einer Schütthöhe für den fließfähigen Beton;
- Definieren einer Rüttelzeit, während der die Betonverdichtungsvorrichtung an einem jeweiligen Ort den Beton zu verdichten hat;
- Definieren einer Abbindezeit, während der der Beton aushärtet;
- Definieren eines Zeitpunkts, zu dem eine Nachbearbeitung des bereits teilweise oder vollständig ausgehärteten Betons erfolgen kann.

Im Rahmen des Definierens des Baufelds kann insbesondere der Arbeitsbereich definiert werden, d.h. eine zu betonierende Fläche bzw. Wand. Hierbei können Daten aus der BIM-Einrichtung genutzt werden.

Aufgrund von Informationen zum Schalungstyp bzw. der Schaltungsgeometrie, aber auch aufgrund des vorher definierten Baufelds kann die Prozessplanungs-Vorrichtung einen geeigneten Betonverdichtungsvorrichtungstyp auswählen, nämlich insbesondere aus den Kategorien "Innenrüttler" und "Außenrüttler".

Darauf aufbauend kann die Prozessplanungs-Vorrichtung eine oder mehrere konkrete Betonverdichtungsvorrichtungen, also konkrete, für den Betonageprozess zur Verfügung stehende Geräte empfehlen bzw. auswählen. Hierbei können insbesondere Informationen über verfügbare Miet- oder Neugeräte, sei es aus dem Bestand des Unternehmens selbst (Unternehmensflotte) oder aus externen Quellen sein.

Vorab ist es möglich, durch das System den zeitlichen Ablauf der Betonage einschließlich der Zuführung des frischen Betons zu definieren, z.B. abhängig von der Anfahrt von Betonmischern und deren zeitlichem Ablauf.

Es können Orte definiert werden, an denen die Betonverdichtungsvorrichtung den Beton zu verdichten hat. Zum Beispiel können Eintauchpunkte für einen oder mehrere Innenrüttler definiert werden, sowie die Reihenfolge, in der der oder die Innenrüttler nacheinander an den verschiedenen Orten den Beton verdichten sollen. Analog können auch die Orte für die Positionierung von Außenrüttlern an einer Betonschalung definiert werden.

Die Prozessplanungs-Vorrichtung kann darüber hinaus Orte definieren oder auswählen, an denen Komponenten einer Elektroversorgung für die Betonverdichtungsvorrichtung zu positionieren sind. Dies können z.B. Stromanschlüsse, Elektroverteiler, Kabel u.Ä. sein. Zudem können auch entsprechende Frequenzumformer bereitgestellt werden, die zum Betrieb der Rüttler benötigt werden und die mit elektrischer Energie versorgt werden müssen.

Die Prozessplanungs-Vorrichtung kann weiterhin Orte definieren, an denen noch fließfähiger Beton zuzuführen ist. Somit können die Orte, an denen nacheinander Beton eingefüllt werden muss, vorgegeben werden. Dies betrifft z.B. die Rüsselführung eines Betonrüssels bei einer Betonpumpe oder bei einer Betonbombe, die von einem Kran gehalten wird.

Auch die Schütthöhe für den fließfähigen Beton kann durch die Prozessplanungs-Vorrichtung definiert, also ausgewählt oder festgelegt werden.

Von großer Bedeutung kann es sein, durch die Prozessplanungs-Vorrichtung die Rüttelzeit zu definieren, während der die jeweilige Betonverdichtungsvorrichtung an einem jeweiligen Ort zu verdichten hat. Bei mehreren Betonverdichtungsvorrichtungen, die gerade bei größeren Betonagevorgängen im Einsatz sind, können dementsprechend auch mehrere Orte und Rüttelzeiten vorgegeben werden.

Auch die Abbindezeit, während der der Beton aushärten muss, bevor die nächsten Schritte (Nachbearbeitung, Abbau der Schalung) angegangen werden können, kann definiert werden.

Hilfreich kann es sein, wenn durch die Prozessplanungs-Vorrichtung einer oder mehrere Zeitpunkte definiert werden, zu dem eine Nachbearbeitung des bereits teilweise oder vollständig ausgehärteten Betons erfolgen kann. Die Prozessplanungs-Vorrichtung kann dementsprechend eine Empfehlung für den Zeitpunkt der Folgearbeiten aussprechen. Derartige Folgearbeiten können z.B. mit Hilfe von Flügelglättern, Abziehbohlen bzw. Vibrationsbohlen oder Fugenschneidern erfolgen. Auch ein Bewässern ist möglich.

Bei einer Ausführungsform kann die Betonverdichtungsvorrichtung ein Innenrüttler sein, wobei auch mehrere Innenrüttler vorgesehen sein können, wobei die Prozessplanungs-Vorrichtung ausgebildet sein kann, um eine Wegplanung zum Führen des Innenrüttlers vorzugeben. Die Wegplanung kann z.B. mit Hilfe eines Systems erfolgen, wie es in der nachveröffentlichten DE 10 2022 134 330 A1 beschrieben ist.

Es kann eine Anzeigevorrichtung vorgesehen sein, zum Anzeigen von Informationen, die durch die Prozessplanungs-Vorrichtung erstellt worden sind. Insbesondere können die Informationen je nach Wahl einer Bedienperson angezeigt werden. Die Bedienperson kann gezielt Informationen abfragen. Des Weiteren können auch Informationen angezeigt werden, die von anderen Komponenten als der Prozessplanungs-Vorrichtung bereitgestellt werden und die von der Prozessplanungs-Vorrichtung genutzt werden, um den Betonageprozess zu planen.

Die Prozessplanungs-Vorrichtung kann ausgebildet sein, um wenigstens einen der folgenden Schritte auszuführen: Auswerten von Informationen zu der Maschenweite einer Armierung; Auswerten von Informationen zu der Geometrie des zu verdichtenden Betons; Auswerten der Art des zu verdichtenden Betons; Auswerten von Informationen zu einem Schalungstyp.

Bei der Geometrie des zu verdichtenden Betons können insbesondere die Fläche und die Dicke berücksichtigt werden, um auf diese Weise Information über das Volumen, aber auch die Anforderungen an die Eintauchpunkte und Verdichtungstiefe zu gewinnen.

Bei der Art des zu verdichtenden Betons kann insbesondere die Viskosität bzw. Steifigkeit (Konsistenzklasse) berücksichtigt werden, um daraus Rückschlüsse über die Ermittlung der notwendigen Rüttelung zu gewinnen.

Aus dem Schalungstyp kann abgeleitet werden, welche Art von Schalung verwendet wird und welche besonderen Anforderungen für die Bearbeitung des Betons dabei gelten.

Die Prozessplanungs-Vorrichtung kann ausgebildet sein, um wenigstens einen der folgenden Schritte auszuführen: Erstellen von wenigstens zwei alternativen Prozessplänen für den Betonageprozess bei gleichen Randbedingungen; Auswählen des besten Prozessplans aus den vorher erstellten alternativen Prozessplänen.

Demnach kann die Prozessplanungs-Vorrichtung in der Lage sein, mehrere alternative Wege für den Betonageprozess auszuarbeiten und nachfolgend zu vergleichen. Die Auswahl des besten Prozessplans kann nach unterschiedlichen Kriterien erfolgen, z.B. nach Zeitaufwand (schnellste oder langsamste Betonage), Geräteeinsatz (viele oder wenige Geräte notwendig), Energieaufwand. Je nach Schwerpunktsetzung kann schließlich eine Bedienperson entscheiden, welcher Prozessplan unter den vorgegebenen Bedingungen am besten geeignet ist.

Es wird ein Verfahren zum Unterstützen eines Betonageprozesses mit Ortbeton auf einer Baustelle angegeben, mit den Schritten:
- Speichern eines Bauwerksdatenmodells (BIM);
- Dokumentieren und Speichern von Umgebungsparametern aus einer Systemumgebung;
- Speichern von Betonageinformationen;
- Erstellen eines Prozessplans für den Betonageprozess aufgrund von Informationen aus dem Bauwerksdatenmodell, den Umgebungsparametern und der Betonageinformationen.

Zum Erstellen des Prozessplans kann wenigstens einer der folgenden Schritte ausgeführt werden:
- Definieren eines Baufelds, in dem der Betonageprozess erfolgen soll;
- Empfehlen eines Betonverdichtungsvorrichtungstyps aufgrund von Informationen zu Betonsorte, Schalungstyp und/oder Schalungsgeometrie;
- Empfehlen/Auswählen von wenigstens einer Betonverdichtungsvorrichtung aufgrund des empfohlenen Betonverdichtungsvorrichtungstyps und aufgrund von Informationen über verfügbare Miet- oder Neugeräte;
- Definieren von Orten, an denen die Betonverdichtungsvorrichtung den Beton zu verdichten hat;
- Definieren von Orten, an denen Komponenten einer Elektroversorgung für die Betonverdichtungsvorrichtung zu positionieren sind;
- Definieren von Orten, an denen noch fließfähiger Beton zuzuführen ist;
- Definieren einer Schütthöhe für den fließfähigen Beton;
- Definieren einer Rüttelzeit, während der die Betonverdichtungsvorrichtung an einem jeweiligen Ort den Beton zu verdichten hat;
- Definieren einer Abbindezeit, während der der Beton aushärtet;
- Definieren eines Zeitpunkts, zu dem eine Nachbearbeitung des bereits teilweise oder vollständig ausgehärteten Betons erfolgen kann.

Weiterhin wird ein Computerprogramm angegeben, umfassend Befehle, die bei der Ausführung des Programms durch einen Computer diesen veranlassen, eines der vorstehend beschriebenen Verfahren auszuführen.

Das Planungssystem kann dementsprechend in Form einer Betonage-Planungssoftware realisiert werden, die anhand bestehender BIM-Daten mittels einer Recheneinheit die optimalen Verdichtungsgeräte und/oder den passenden Prozessablauf errechnet und dem Anwender vorschlägt. Das System kann mit einer Maschinendatenbank mit Leistungsdaten und Wirkradius verknüpft sein, zur Auswahl passender bzw. optimaler Geräte für das jeweilige Projekt.

Zum Beispiel kann das System mit einer Datenbank mit verfügbaren Maschinen verknüpft werden, wobei in der Datenbank bereits vor Ort zur Verfügung stehende Innenrüttler, Außenrüttler oder Umformer als Bestandsgeräte oder alternativ von einem Hersteller lieferbare Geräte zum Kauf bzw. Miete oder auch andere Fremdgeräte hinterlegt sind.

Auf Grundlage der Daten kann das System einzelne Geräte oder eine Gerätekombination vorschlagen, wobei Kriterien z.B. der Wirtschaftlichkeit, technischen Umsetzbarkeit, Geräteverfügbarkeit und Prozessoptimierung berücksichtigt werden können.

Das System kann eine oder mehrere Empfehlungen (Ranking) nach vorgegebenen Kriterien erstellen: Position eines definierten Arbeitsbereichs zur Nutzung des jeweiligen Geräts (Eintauchpunkte Innenrüttler, Anbringungspunkte Außenrüttler); Art von nutzbaren Verdichtungsgeräten sowie deren Anzahl; Liste von Geräten zur Vorbereitung des Projekts mit den Kriterien optimale Rüttelflasche, optimale Schlauchlänge, optimale Spannklammer zum Befestigen eines Außenrüttlers, optimale Außenrüttler hinsichtlich Unwucht und Drehzahl.

Das System ist in der Lage, eine Abschätzung der Prozesslaufzeit vorzunehmen, anhand der bekannten Parametersätze, und zwar detailliert im Hinblick auf die Einsatzzeit der zu verwendenden Geräte.

Die Betonageparameter können mit Umweltdaten verknüpft werden, wie z.B. Wetterprognosen (Temperatur, Luftfeuchtigkeit), um den Betonageprozess optimal anpassen zu können. Zum Beispiel kann das System ein Zeitfenster für die Betonverdichtung vorschlagen, sowie geeignete Trocknungszeiten.

Das System kann in der Lage sein, die Infrastruktur zu analysieren, wie z.B. bekannte und kartografierte Energieversorgungspunkte auf einer Baustelle, z.B. unter Verwendung der BIM-Daten. Daraus kann das System Empfehlungen ableiten, wie z.B. hinsichtlich der benötigten Kabel, Stecker, Verteiler, Adapter usw. Ebenso kann das System ermitteln, wie viele Akkus bzw. Akkuladungen für einen Betonagevorgang erforderlich sind, wenn z.B. ein akkubetriebener Innenrüttler eingesetzt wird. Weiterhin kann das System ein Lademanagement in der Baufeldplanung für die Akkus und Ladegeräte auf der Ortbaustelle vornehmen.

Mit Hilfe des vorgeschlagenen Systems kann ein optimaler Geräteeinsatz auf Großbaustellen erreicht werden, bei maximaler Wirtschaftlichkeit. Das Bauvorhaben kann mit Hilfe eines digitalen Zwillings lange vor Baubeginn geplant werden, um geeignete Vorbereitungen zu treffen.

Diese und weitere Vorteile und Merkmale der Erfindung werden nachfolgend anhand von Beispielen näher erläutert. Es zeigen:
- **Fig. 1**: in schematischer Darstellung den Aufbau eines erfindungsgemäßen Planungssystems zum Unterstützen eines Betonageprozesses;
- **Fig. 2**: das System von Fig. 1 in größerer Detaillierung;
- **Fig. 3**: den Abschnitt "Prozessplanung" aus Fig. 2 in vergrößerter Darstellung;
- **Fig. 4**: den Bereich "BIM" aus Fig. 2 in größerer Darstellung;
- **Fig. 5**: den Bereich "Datenbank" von Fig. 2 in größerer Darstellung; und
- **Fig. 6**: den Bereich "Systemumgebung" von Fig. 2 in größerer Darstellung,

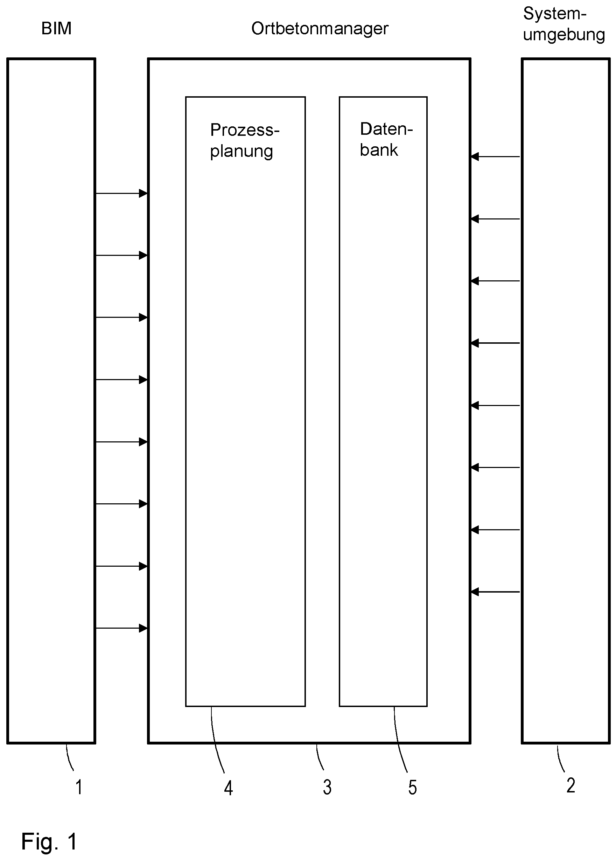

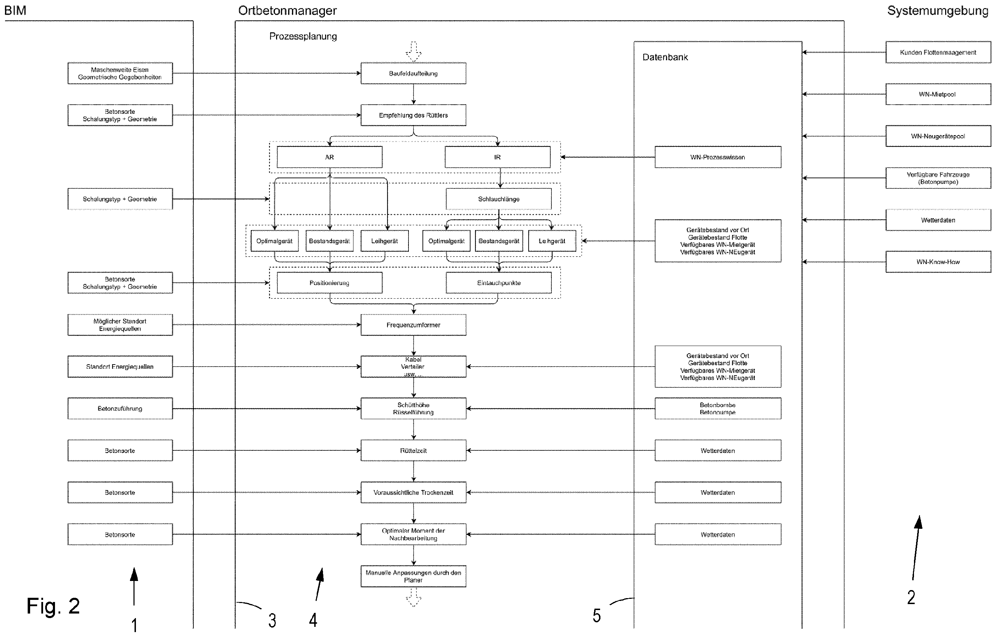

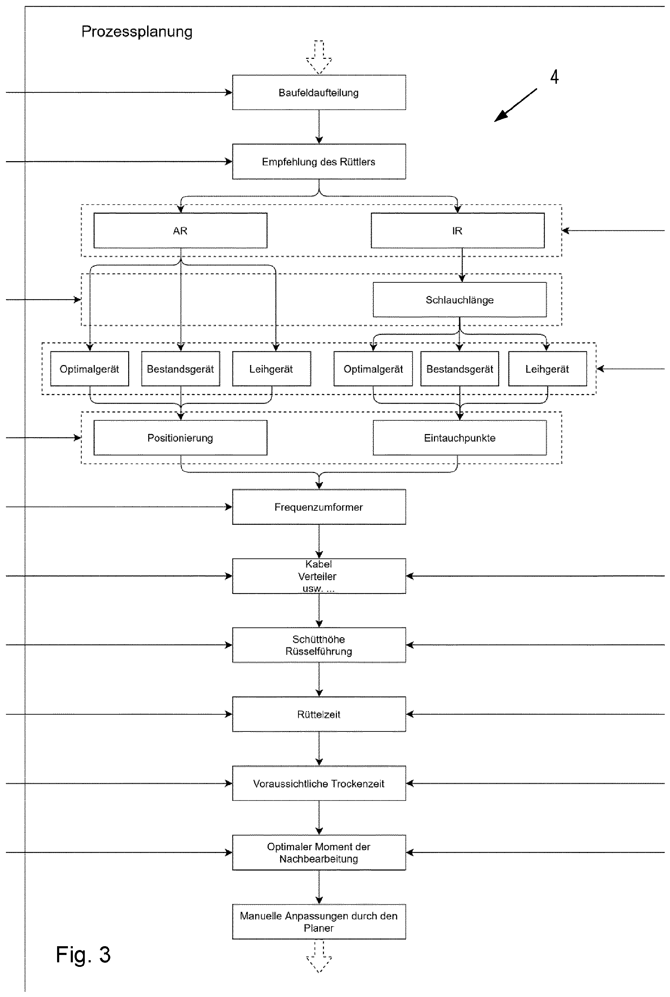

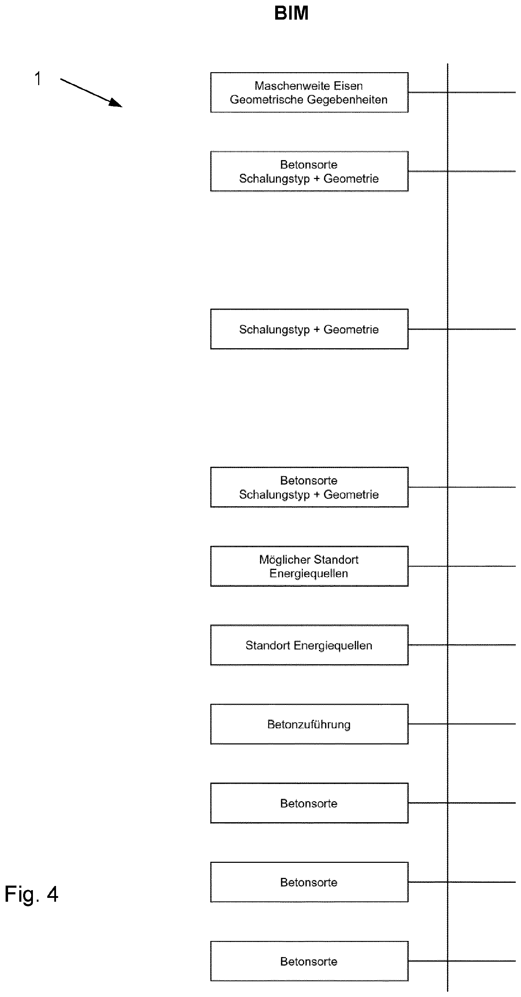

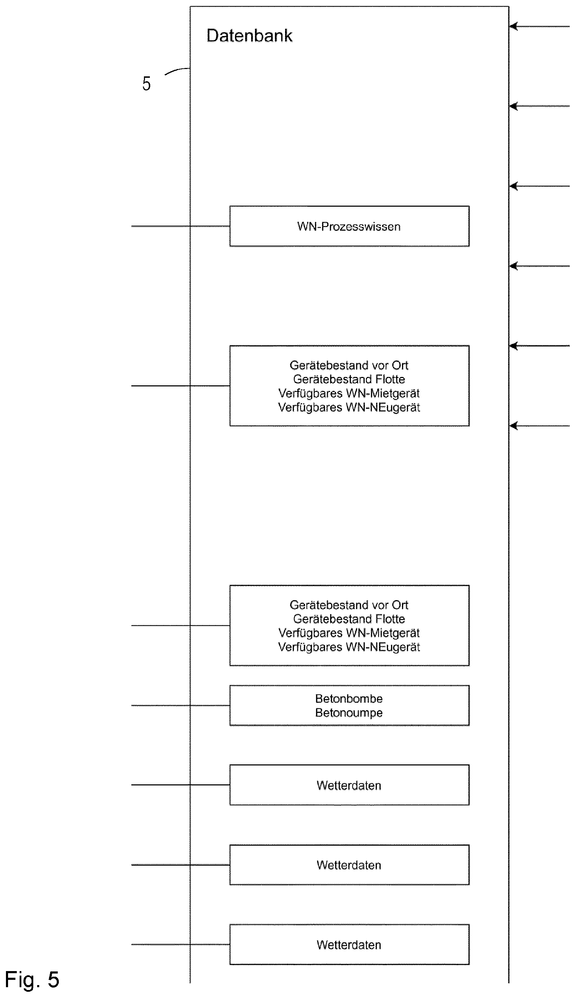

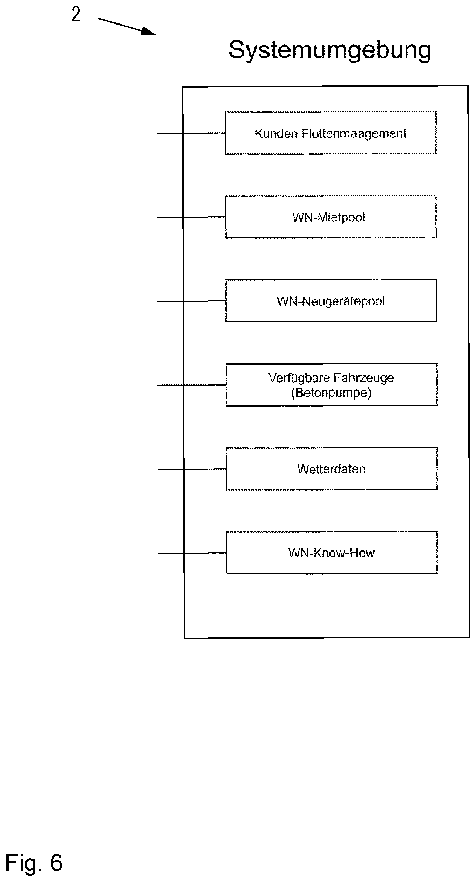

Die Figuren 1 bis 6 zeigen ein Beispiel für ein erfindungsgemäßes Planungssystem zum Unterstützen eines Anwenders beim Planen eines Betonageprozesses mit Ortbeton auf einer Baustelle. Dabei zeigen die Figuren 1 bis 6 das Planungssystem in unterschiedlichem Detaillierungsgrad. Fig. 1 gibt einen groben Überblick, während Fig. 2 zahlreiche Details enthält, die aus Gründen der Übersichtlichkeit in Fig. 2 gemeinsam dargestellt sind. Um jedoch die Lesbarkeit zu erhöhen, werden die einzelnen Bereiche in den Figuren 3 bis 6 im größeren Maßstab gezeigt.

Das Planungssystem weist eine BIM-Einrichtung 1 auf, in der Informationen zu einem Bauwerksdatenmodell (BIM) hinterlegt sind. Die Informationen können vielfältig sein und jeglichen Aspekt eines Bauwerks betreffen.

In einer Umgebungseinrichtung 2 sind Informationen außerhalb des eigentlichen Systems, nämlich aus der Umgebung des Systems hinterlegt. Diese können z.B. Informationen zu verfügbaren (Betonverdichtungs-)Geräten, sei es Bestandsgeräte des Bauunternehmens, mietbare Geräte aus einem Geräte-Mietpool, Neugeräte aus einem Neugeräte-Pool, bzw. käufliche Neugeräte, verfügbare Betonfahrzeuge, verfügbare Betonpumpen aber auch Wetterdaten oder allgemeines Know-how betreffen.

Im Kern des Planungssystems steht ein so genannter Ortbetonmanager 3, der z.B. in Form einer Software realisiert sein kann. Der Ortbetonmanager 3 weist eine als Prozessplanungs-Vorrichtung dienende Prozessplanung 4 und eine als Datenbank-Einrichtung dienende Datenbank 5 auf.

In der Prozessplanung 4 sind Maßnahmen zum Auswählen und Festlegen verschiedener Parameter möglich, um einen Betonageprozess zu definieren und zu optimieren.

In der Datenbank 5 sind die dazu notwendigen Daten hinterlegt. Insbesondere kann die Datenbank 5 durch Daten von der Umgebungseinrichtung 2 gespeichert werden.

Der Ortbetonmanager 3 bzw. seine Komponenten Prozessplanung 4 und Datenbank 5 werden insbesondere auch durch Daten aus der BIM-Einrichtung 1 gespeist.

Fig. 2 zeigt den schematischen Aufbau von Fig. 1 in größerem Detail, die Figuren 3 bis 6 jeweils Ausschnittsvergrößerungen.

Die einzelnen Aspekte, Verknüpfungen und Fragestellungen sind gut aus Fig. 2 ersichtlich. Insbesondere dokumentiert Fig. 2 im Detail den Ablauf der Prozessplanung 4 und die jeweilige Berücksichtigung der verschiedenen Parameter, die der Prozessplanung 4 jeweils zugeführt werden. Die Fig. 2 erschließt in guter Übersichtlichkeit das Zusammenspiel der einzelnen Aspekte. Daher wird zur Verbesserung der Lesbarkeit und der Verständlichkeit von einer schriftlichen Wiederholung der in Fig. 2 gut erkennbaren Zusammenhänge im Rahmen dieser Beschreibung abgesehen.

Zudem wurden die einzelnen Aspekte auch bereits oben im Zusammenhang mit der allgemeinen Erläuterung der Erfindung beschrieben, so dass an dieser Stelle auf eine Wiederholung verzichtet wird.

Das Planungssystem kann gut als Software realisiert sein und auf einem Computer betrieben werden. Dabei ist es sinnvoll, wenn der Computer vernetzt ist und auf externe Daten, insbesondere in Bezug auf die Umgebungseinrichtung 2 oder auch die BIM-Einrichtung 1 zugreifen kann. Auch eine vernetzte Realisierung des Planungssystems auf mehreren Computern ist möglich.

## Patentansprüche

1. Planungssystem zum Unterstützen eines Betonageprozesses mit Ortbeton auf einer Baustelle, mit
- einer BIM-Einrichtung (1) zum Speichern eines Bauwerksdatenmodells (BIM);
- einer Umgebungs-Einrichtung (2) zum Dokumentieren und Speichern von Umgebungsparametern aus einer Systemumgebung;
- einer Datenbank-Einrichtung (5) zum Speichern von Betonageinformationen; und mit
- einer Prozessplanungs-Vorrichtung (3) zum Erstellen eines Prozessplans für den Betonageprozess aufgrund von Informationen aus der BIM-Einrichtung, der Umgebungs-Einrichtung und der Datenbank-Einrichtung.

2. Planungssystem nach Anspruch 1, wobei das Bauwerksdatenmodell Bauwerksdaten enthält, ausgewählt aus der Gruppe:
geometrische Gegebenheiten, Maschenweite Eisen, Betonsorte, Schalungstyp, Schalungsgeometrie, Standort des Betonageprozesses, Standort von Energiequellen, Betonzuführung.

3. Planungssystem nach einem der vorstehenden Ansprüche, wobei die geometrischen Gegebenheiten 3D-Daten der Baustelle aufweisen.

4. Planungssystem nach einem der vorstehenden Ansprüche, wobei die Umgebungsparameter Informationen aufweisen, die ausgewählt sind aus der Gruppe:
Unternehmens-Flottenmanagement, Geräte-Mietpool, Neugeräte-Pool, verfügbare Betonfahrzeuge, verfügbare Betonpumpe, Wetterdaten, Know-How.

5. Planungssystem nach einem der vorstehenden Ansprüche, wobei die Betonageinformationen ausgewählt sind aus der Gruppe:
Prozesswissen, Gerätebestand vor Ort, Gerätebestand Unternemehmensflotte, verfügbare Mietgeräte, verfügbare Neugeräte, verfügbare Betonbombe, verfügbare Betonpumpe, Wetterdaten.

6. Planungssystem nach einem der vorstehenden Ansprüche, wobei die Prozessplanungs-Vorrichtung (4) ausgebildet ist, um wenigstens einen der folgenden Schritte auszuführen:
- Definieren eines Baufelds, in dem der Betonageprozess erfolgen soll;
- Empfehlen eines Betonverdichtungsvorrichtungstyps aufgrund von Informationen zu Betonsorte, Schalungstyp und/oder Schalungsgeometrie;
- Empfehlen/Auswählen von wenigstens einer Betonverdichtungsvorrichtung aufgrund des empfohlenen Betonverdichtungsvorrichtungstyps und aufgrund von Informationen über verfügbare Bestandsgeräte, Mietgeräte oder Neugeräte;
- Definieren von Orten, an denen die Betonverdichtungsvorrichtung den Beton zu verdichten hat;
- Definieren von Orten, an denen Komponenten einer Elektroversorgung für die Betonverdichtungsvorrichtung zu positionieren sind;
- Definieren von Orten, an denen noch fließfähiger Beton zuzuführen ist;
- Definieren einer Schütthöhe für den fließfähigen Beton;
- Definieren einer Rüttelzeit, während der die Betonverdichtungsvorrichtung an einem jeweiligen Ort den Beton zu verdichten hat;
- Definieren einer Abbindezeit, während der der Beton aushärtet;
- Definieren eines Zeitpunkts, zu dem eine Nachbearbeitung des bereits teilweise oder vollständig ausgehärteten Betons erfolgen kann.

7. Planungssystem nach einem der vorstehenden Ansprüche, wobei der Betonverdichtungsvorrichtungstyp ausgewählt ist aus der Gruppe: ein oder mehrere Innenrüttler, ein oder mehrere Außenrüttler.

8. Planungssystem nach einem der vorstehenden Ansprüche, wobei
- die Betonverdichtungsvorrichtung ein Innenrüttler ist; und wobei
- die Prozessplanungs-Vorrichtung (4) ausgebildet ist, um eine Wegplanung zum Führen des Innenrüttlers vorzugeben.

9. Planungssystem nach einem der vorstehenden Ansprüche, wobei eine Anzeigevorrichtung vorgesehen ist, zum Anzeigen von Informationen, die durch die Prozessplanungs-Vorrichtung erstellt worden sind.

10. Planungssystem nach einem der vorstehenden Ansprüche, wobei die Prozessplanungs-Vorrichtung (4) ausgebildet ist, um wenigstens einen der folgenden Schritte auszuführen:
- Auswerten von Informationen zu der Maschenweite einer Armierung;
- Auswerten von Informationen zu der Geometrie des zu verdichtenden Betons;
- Auswerten der Art des zu verdichtenden Betons;
- Auswerten von Informationen zu einem Schalungstyp.

11. Planungssystem nach einem der vorstehenden Ansprüche, wobei die Prozessplanungs-Vorrichtung (4) ausgebildet ist, um wenigstens einen der folgenden Schritte auszuführen:
- Erstellen von wenigstens zwei alternativen Prozessplänen für den Betonageprozess bei gleichen Randbedingungen;
- Auswählen des besten Prozessplans aus den vorher erstellten alternativen Prozessplänen.

12. Verfahren zum Unterstützen eines Betonageprozesses mit Ortbeton auf einer Baustelle, mit den Schritten
- Speichern eines Bauwerksdatenmodells (BIM);
- Dokumentieren und Speichern von Umgebungsparametern aus einer Systemumgebung;
- Speichern von Betonageinformationen;
- Erstellen eines Prozessplans für den Betonageprozess aufgrund von Informationen aus dem Bauwerksdatenmodell, den Umgebungsparametern und der Betonageinformationen.

13. Verfahren nach Anspruch 12, wobei zum Erstellen des Prozessplans wenigstens einer der folgenden Schritte ausgeführt wird:
- Definieren eines Baufelds, in dem der Betonageprozess erfolgen soll;
- Empfehlen eines Betonverdichtungsvorrichtungstyps aufgrund von Informationen zu Betonsorte, Schalungstyp und/oder Schalungsgeometrie;
- Empfehlen/Auswählen von wenigstens einer Betonverdichtungsvorrichtung aufgrund des empfohlenen Betonverdichtungsvorrichtungstyps und aufgrund von Informationen über verfügbare Miet- oder Neugeräte;
- Definieren von Orten, an denen die Betonverdichtungsvorrichtung den Beton zu verdichten hat;
- Definieren von Orten, an denen Komponenten einer Elektroversorgung für die Betonverdichtungsvorrichtung zu positionieren sind;
- Definieren von Orten, an denen noch fließfähiger Beton zuzuführen ist;
- Definieren einer Schütthöhe für den fließfähigen Beton;
- Definieren einer Rüttelzeit, während der die Betonverdichtungsvorrichtung an einem jeweiligen Ort den Beton zu verdichten hat;
- Definieren einer Abbindezeit, während der der Beton aushärtet;
- Definieren eines Zeitpunkts, zu dem eine Nachbearbeitung des bereits teilweise oder vollständig ausgehärteten Betons erfolgen kann.

14. Computerprogramm, umfassend Befehle, die bei der Ausführung des Programms durch einen Computer diesen veranlassen, das Verfahren nach Anspruch 12 oder 13 auszuführen.
